# EUROPÄISCHE PATENTSCHRIFT

(11) **EP 1 436 471 B1**
(45) Veröffentlichungstag und Bekanntmachung des Hinweises auf die Patenterteilung: **25.01.2006**
(21) Anmeldenummer: 02774557.9
(22) Anmeldetag: 03.09.2002
(51) Int. Cl.: E04B 1/80

(54) **PANEELE MIT EINEM VAKUUMELEMENT FÜR AUSSENWANDKONSTRUKTIONEN**
PANEL WITH A VACUUM ELEMENT FOR OUTER WALL CONSTRUCTIONS
PANNEAU A ELEMENT SOUS VIDE POUR CONSTRUCTIONS DE PAROIS EXTERIEURES

(30) Priorität: 05.09.2001 DE 10143578
(43) Veröffentlichungstag der Anmeldung: 14.07.2004
(73) Patentinhaber: Feldmeier, Franz, 83109 Grosskarolinenfeld (DE)
(72) Erfinder: Feldmeier, Franz, 83109 Grosskarolinenfeld (DE)
(74) Vertreter: HOFFMANN EITLE
(86) Internationale Anmeldenummer: PCT/EP2002/009838
(87) Internationale Veröffentlichungsnummer: WO 2003/023157

(56) Entgegenhaltungen:
- DE-A- 4 339 435
- DE-A- 19 923 057
- DE-U- 29 804 099
- US-A- 5 527 411

## Beschreibung

### Gebiet der Erfindung

Die Erfindung betrifft ein Paneel für Wandkonstruktionen, die Wärmedämmaufgaben übernehmen, insbesondere Außenwandkonstruktionen, wobei das Paneel in Form eines einzelnen oder mehrerer Bauteile zwischen Rahmenprofilelementen anbringbar ist. Es kann sich somit bei dem erfindungsgemäßen Paneel um ein Paneel für eine Wand und Brüstung einer Außenwandkonstruktion mit Rahmentragstrukturen oder um ein Ausfachungselement für sogenannte Elementfassaden handeln.

### Stand der Technik

Bei der Erstellung von Fassaden und insbesondere bei der Renovierung von Gebäuden, bei denen aufgrund baulicher Gegebenheiten keine große Bautiefe möglich ist, werden große Anstrengungen unternommen, trotz des beschränkten Raumes Lösungen zu entwickeln, welche die gesetzlichen Erfordernisse in Bezug auf die Wärmedämmung erfüllen. In der Technik sind sogenannte Vakuum-Isolationselemente bekannt. Diese bestehen aus einem plattenförmigen, druckstabilen Kernmaterial, das aus verpresstem Pulver, Glasfaser oder offenporigen Kunststoffschäumen besteht. Das Kernmaterial muss insofern druckstabil sein, als es bei der Herstellung des Vakuum-Isolationselements in Folie eingeschlagen, und nachfolgend evakuiert wird. Dem hierbei auftretenden Druck muss es standhalten. Die Kerne sind mit einer Hochbarrierefolie unter Anwendung einer speziellen Technik gasdicht umschlossen und evakuiert. Die Verpackungshülle kann beispielsweise aus einer aluminiumbedampften PE-Folie bestehen, wobei die Außenschicht Polyester ist. Damit das Kernmaterial evakuiert werden kann, muss die Folie luftdicht verschweißt werden. Die Aluminiumbedampfung der Folie stellt dabei die Dampfdiffusionsdichtigkeit sicher, während die Verschweißung der Folie auf der PE Seite erfolgt. Um eine Dauerbeständigkeit der Folienverschweißung sicherzustellen, müssen deutliche Anwendungsgrenzen in Bezug auf die Temperatur und Feuchtigkeit eingehalten werden.

Vakuum-Isolationspaneele werden aufgrund der sehr guten Wärmedämmeigenschaften mit einer Wärmeleitfähigkeit von ca. 0,005 W/(m K) zur Wärmedämmung von Kühlgeräten und Brennstoffzellen, zur Verkleidung von Transportbehältern für tiefgefrorene, gekühlte und warme Güter sowie im Fassadenbau als Dämmstoffe eingesetzt. Die im Fassadenbau eingesetzten Vakuum-Isolationspaneele werden als flächige Bauteile zwischen Innendichtungsstreifen und Außendichtungsstreifen eingesetzt und sind zur Innenseite hin mit einer Innenschale umgeben, die aus Aluminium oder Stahlblech besteht und eine Dicke von nur wenigen Millimetern besitzt. Zur Außenseite hin kann Aluminiumblech oder aber ausreichend thermisch stabiles Glas, z.B. Einscheibensicherheitsglas (ESG) oder teilvorgespanntes Glas (TVG) verwendet werden. Die Dimensionierung der äußeren Paneelschale erfolgt hierbei nach statischen Erfordernissen in Abhängigkeit von der Einbauhöhe, der Einbausituation und der Paneelgröße. Der häufigste Aufbau besteht hierbei darin, dass ein Vakuum-Isolationselement in ein Isolierglas mit zwei Scheiben, einer inneren und einer äußeren Scheibe, integriert ist.

Das verwendete Glas muss vorzugsweise opak sein, weil die Verpackungshülle des Kernmaterials bei Dauerbelastung nicht über 80°C erhitzt werden sollte. Gemäß dem Stand der Technik bieten Vakuum-Isolationspaneele nur einen begrenzten Schallschutz. Ferner darf ein Vakuum-Isolationselement nicht dauerfeucht werden, so dass es in weitgehend dampfdichte Aufbauten, wie z.B. Isolierglas, integriert werden muss. Um Vakuum-Isolationspaneele in Bezug auf den Schallschutz zu verbessern, wird empfohlen, diese in Isolierglas mit einem allseitig vorhandenen Luftspalt von etwa 2mm einzubauen. Diese Maßnahme ist allerdings sehr aufwendig, so dass man bestrebt ist, den Schallschutz mit einfacheren Mitteln zu verbessern.

Die US 5,527,411 beschreibt einen Paneelaufbau mit einem Vakuum-Isolationspaneel, das sich innerhalb einer festen Abdeckung befindet. Sind mehrere einzelne Vakuum-Isolationspaneele vorgesehen, so können sich zwischen diesen Verbindungseinsätze befinden, die auch aus Glaswolle bestehen können. Es wird somit eine Wärmedämmung dargestellt, bei der Vakuum-Isolationspaneele neben Glaswolleelementen verwendet werden, die jeweils in einer Anordnung nebeneinander vorgesehen sind.

Der in der DE 199 23 057 A1 beschriebene Paneelaufbau für Fenster, Türen und Fassaden umfasst ein Vakuum-Isolationspaneel, das im Innenraum eines Paneels angeordnet wird. Der Paneelinnenraum wird allgemein durch zwei Außenplatten und einen Randverbund begrenzt, wobei die Außenplatten aus Glas, Blech, Kunststoff, Keramik, Steinwerk oder aus kunststoffkaschiertem Holz bestehen können. Im Anschluss an das Paneel kann eine zusätzliche Wärmedämmung vorgesehen sein, wenn die geforderte Wärmedämmung durch das Paneel nicht ausreicht.

Das in der DE 43 39 435 A1 beschriebene Mehrscheibenpaneel umfasst einen evakuierten, plattenartigen Formkörper, der aus einem feinverteilten, pulver- bzw. faserförmigen Stoff und gegebenenfalls einer gas- und wasserdichten Umhüllung bestehen kann und zwischen zwei Scheiben eines Isolierglasfensters eingesetzt wird. Der Hohlraum zwischen den Scheiben und dem darin befindlichen Isolationsformkörper kann mit einem Isolierschaum oder einer pulverförmigen Substanz zur Adsorption von Wasser gefüllt sein.

Aus der DE 298 04 099 U1 ist der Einsatz von Vakuum-Isolationspaneelen in Kühl- und Gefriergeräten bekannt. Ausgehend von der Aufgabenformulierung, eine Abdeckung zu schaffen, die bei unveränderter Wandstärke die Isolationseigenschaften bzw. -wirkung von beweglichen, abnehmbarer Abdeckungen gewerblicher Kühl- bzw. Gefriertruhen verbessert, wird ein Vakuum-Isolationspaneel mit Polyurethanschaum als Ergänzung kombiniert. Das Vakuum-Isolationspaneel wird hierbei zur Innenseite des Gefriergerätes hin angeordnet. Die DE 298 04 099 U1 stellt den nächstkommenden Stand der Technik dar.

### Darstellung der Erfindung

Der Erfindung liegt die Aufgabe zugrunde, praxisverwendbare, weniger empfindliche Paneele mit einem möglichst einfachen Aufbau zu schaffen, die für einen besseren Schallschutz und eine bessere Wärmedämmung sorgen.

Diese Aufgabe wird durch einen Paneelaufbau mit den Merkmalen des Anspruchs 1 gelöst.

Der Erfindung liegt der Gedanke zugrunde, einen Paneelaufbau in Form eines einzelnen oder mehrerer Bauteile vorzuschlagen, der zwischen Rahmenprofilelementen anbringbar ist und mindestens ein Vakuum-Isolationspaneel und ein Dämmelement umfasst. Das Vakuum-Isolationspaneel und das Dämmelement sind zwischen einer äußeren Abdeckung und einer inneren Abdeckung angeordnet. Weiterhin umfasst der Paneelaufbau Abstandshalter. Diese können entweder zwischen dem mindestens einen Vakuum-Isolationspaneel und der an dem Dämmelement angrenzenden Abdeckung oder aber zwischen der inneren Abdeckung und äußeren Abdeckung angeordnet und vorzugsweise mit diesen verklebt sein. Die Abstandshalter können im allgemeinen aus Holz, druckfestem Schaum, druckfester Mineralfaser und dergleichen bestehen und dienen dazu, eine Kompression des Dämmelements beim Einspannen des Paneelaufbaus zu verhindern. Darüber hinaus können die Abstandshalter dazu dienen, den gesamten Paneelaufbau als einzige Baueinheit zu verbinden. Durch das Vorsehen von Verklebungen lässt sich im Falle von Abstandshaltern, die sich zwischen innerer und äußerer Abdeckung erstrecken, das gesamte Paneel zu einer Baueinheit verbinden, während im Falle der Anordnung eines Abstandshalters zwischen einem Vakuum-Isolationselement und der an dem Dämmelement angrenzenden Abdeckung das Vakuum-Isolationselement mit der anderen Abdeckung verklebt sein sollte. Die zusätzliche Dämmschicht in Form des Dämmelementes dient der Verbesserung der Schalldämmung, verbessert aber auch die Wärmedämmung. Der Hauptgesichtspunkt besteht aber darin, das dass Vakuum-Isolationspaneel mit unterlegenen Schalldämmeigenschaften mit einem Dämmelement zu einem Paneelaufbau zusammengefasst wird, wobei das Dämmelement weniger der Wärmedämmung als vielmehr der Schalldämmung dient.

Die Schalldämmung kann auf eine sehr kostengünstige Weise erzielt werden. Insbesondere muss das Vakuum-Isolationspaneel nicht in ein Isolierglas integriert werden. Ein Isolierglasaufbau ist deswegen aufwendig, weil die beiden Glasscheiben mit Abstandshaltern versehen und zudem Trockenmittel zur Aufnahme von Feuchte zwischen den Glasscheiben vorgesehen sein muss. Schließlich muss eine zweifache Abdichtung mit Butyl und Polysulfid oder Silikon oder PU erfolgen. All diese Maßnahmen sind beim erfindungsgemäßen Paneelaufbau nicht erforderlich und die Schallschutzerfordernisse werden wie bei einem konventionellen Paneel erfüllt.

Weiterhin befindet sich das Vakuum-Isolationspaneel näher zur inneren Abdeckung als das Dämmelement. Der Vorteil dieser Gestaltung besteht darin, dass kein Tauwasserrisiko am Vakuum-Isolationspaneel besteht und ein konventioneller Paneelaufbau möglich ist. Darüber hinaus ist die Gefahr eines Überhitzungsrisikos durch Sonneneinstrahlung mittels der Position des Vakuum-Isolationspaneels zur Raumseite hin ausgeschaltet. Ein weiterer Vorteil besteht darin, dass sich die äußere Abdeckung, insbesondere im Falle einer äußeren Glasabdeckung, beliebig gestalten lässt. Das verminderte Tauwasserrisiko und Überhitzungsrisiko hat schließlich zur Folge, dass eine hohe Lebensdauer des Vakuum-Isolationspaneels gesichert ist.

Auch bei dieser Anordnung des Vakuum-Isolationspaneels relativ zum Dämmelement lassen sich die oben geschilderten Vorteile in Bezug auf den Schallschutz verwirklichen.

Bevorzugte Ausführungsformen folgen aus den übrigen Ansprüchen.

Nach einer bevorzugten Ausführungsform ist das mindestens eine Vakuum-Isolationspaneel mit der inneren Abdeckung verklebt. Da die Vakuum-Isolationspaneele sehr verletzungsempfindlich sind, stellt eine Verklebung mit der im Einbauzustand angrenzenden inneren Abdeckung eine bevorzugte Alternative zur Befestigung der Paneele dar.

Vorzugsweise besteht die äußere Abdeckung aus Glas, vorzugsweise aus ESG (Einscheibensicherheitsglas) oder TVG (teilvorgespanntes Glas). Bei der Gestaltung der äußeren Abdeckung aus Glas lassen sich vielfältige Gestaltungsvarianten unter ästhetischen Gesichtspunkten realisieren.

Insbesondere lassen sich gewünschte ästhetische Effekte erzeugen, indem das Glas der äußeren Abdeckung emailliert oder siebbedruckt oder beschichtet oder eingefärbt ist. Neben den rein ästhetischen Gesichtspunkten können diese Lösungen aber nicht zuletzt auch dazu dienen, den Wärmefluss in dem Paneelaufbau zu beeinflussen und insbesondere zu verringern.

Nach einer alternativen Ausführungsform besteht die äußere Abdeckung aus Metall, vorzugsweise Stahl, Edelstahl oder Aluminium. Diese Variante ist im Vergleich zu der oben genannten Alternative des Vorsehens der äußeren Abdeckung aus Glas sehr kostengünstig und kann ebenfalls in Bezug auf den Wärmefluss in dem Paneelaufbau optimiert werden. Alternativ besteht die äußere Abdeckung aus Kunststoff. Auch bei dieser Gestaltung lassen sich zahlreiche Varianten unter ästhetischen Gesichtspunkten realisieren.

Nach einer bevorzugten Ausführungsform besteht das Dämmelement aus Mineralfaser.

Für die Ausführungsform mit zumindest einem Abstandshalter wird bevorzugt, dass das Vakuum-Isolationspaneel in den Abstandshalter eingelegt ist. Hierdurch kann mit einfachen Mitteln eine Lagefixierung erreicht werden.

Wenn der Paneelaufbau aus mehreren Bauteilen besteht, kann eine Elementfassade aufgebaut sein, indem Rahmenprofilelemente vorgesehen sind, und die äußere Abdeckung der Paneele zwischen einer Innendichtung und einer Außendichtung klemmend gehalten ist und die innere Abdeckung am Rahmenprofil befestigt ist.

### Kurze Beschreibung der Figuren

Nachfolgend wird die Erfindung rein beispielhaft anhand der beiliegenden Figuren beschrieben, in denen:
- Fig. 1: in einer schematischen Schnittansicht eine nicht erfindungsgemäße Gestaltung eines Paneelaufbaus ohne Verwendung von Abstandshaltern und mit Anordnung des Vakuum-Isolationselementes zur Außenseite hin darstellt;
- Fig. 2: eine Darstellung entsprechend Fig. 1 einer alternativen Ausführungsform eines Paneelaufbaus unter Verwendung von Abstandshaltern zeigt;
- Fig. 3: eine Abwandlung des in Fig. 2 dargestellten Paneelaufbaus darstellt;
- Fig. 4: eine Abwandlung des in Fig. 1 dargestellten Paneelaufbaus darstellt;
- Fig. 5 und 6: Einbaualternativen von nicht erfindungsgemäßen Paneelaufbauten als Ausfachungselemente in Rahmenprofilkonstruktionen zeigen;
- Fig. 7: eine Ausführungsform eines erfindungsgemäßen Paneelaufbaus in der Darstellungsweise gemäß Fig. 1 bis 3 und mit einem zur Innenseite hin angeordneten Vakuum-Isolationselement zeigt;
- Fig. 8: eine alternative Gestaltung eines erfindungsgemäßen Paneelaufbaus mit zur Innenseite hin angeordnetem Vakuum-Isolationselement zeigt;
- Fig. 9: eine alternative Gestaltung eines erfindungsgemäßen Paneelaufbaus mit unterschiedlich angeordneten und geformten Abstandshaltern zeigt;
- Fig. 10: eine alternative Gestaltung eines erfindungsgemäßen Paneelaufbaus mit unterschiedlich angeordneten und geformten Abstandshaltern zeigt;
- Fig. 11: eine alternative Gestaltung eines erfindungsgemäßen Paneelaufbaus mit unterschiedlich angeordneten und geformten Abstandshaltern zeigt;
- Fig. 12: die Anbringung eines erfindungsgemäßen Paneelaufbaus mit zur Innenseite gewandtem Vakuum-Isolationselement und ohne die Darstellung der äußeren Abdeckung zeigt.

### Wege zur Ausführung der Erfindung

In den nachfolgenden Figuren werden jeweils dieselben Bauelemente mit denselben Referenzziffern bezeichnet. Wo keine ausdrückliche Erläuterung zu einzelnen Bauelementen vorgenommen wird, kann auf die Informationen in den vorangegangenen Ausführungsformen Bezug genommen werden.

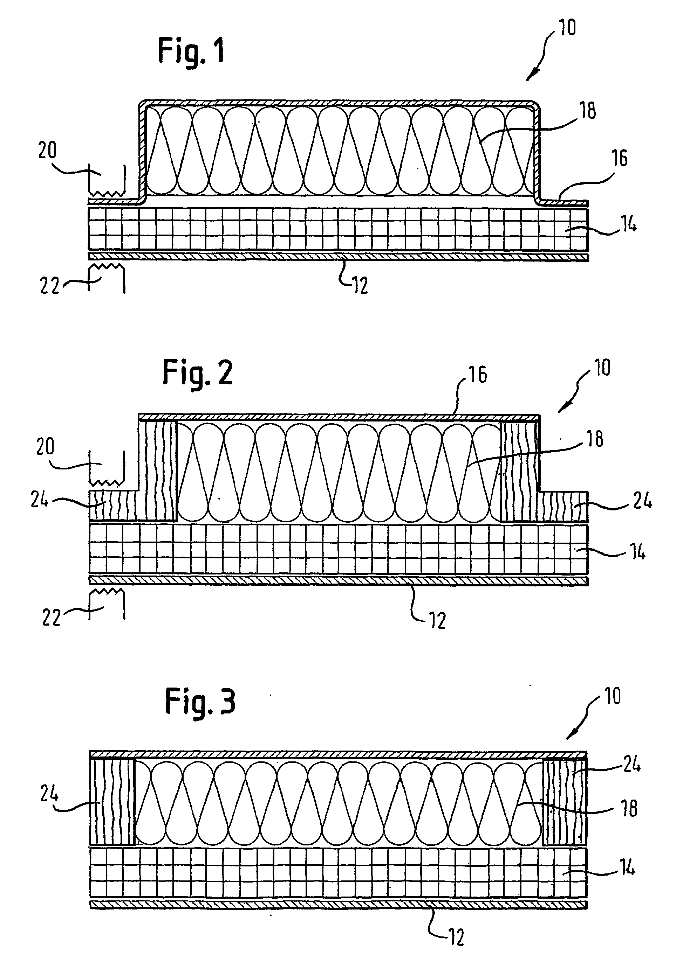

In Fig. 1 ist ein Schnitt durch einen nicht erfindungsgemäßen Paneelaufbau dargestellt. Der allgemein mit Referenzziffer 10 bezeichnete Paneelaufbau umfasst eine äußere Abdeckung 12 aus Metall. Die äußere Abdeckung 12 kann aus Stahl, Edelstahl oder Aluminium sein, wobei im Falle der Verwendung von Aluminium dieses beschichtet oder eloxiert oder in einer anderen Weise bearbeitet sein kann. Darüber hinaus kann die äußere Abdeckung aber ebenso aus Glas oder Kunststoff bestehen. Im Falle der Verwendung von Glas muss eine ausreichende Glasdicke vorhanden sein, um die mechanischen Lasten aufnehmen zu können. Bei der Verwendung der äußeren Abdeckung 12 aus Glas wird im allgemeinen ESG oder TVG eingesetzt. Im Hinblick auf die gewünschte Gestaltung aber auch die Beeinflussung der von der Außenseite in den Paneelaufbau eindringenden Wärme kann das Glas emailliert, siebbedruckt, beschichtet oder vollständig eingefärbt sein. Insbesondere stark eingefärbtes Glas dient dazu, eine zu starke Erwärmung des an der äußeren Abdeckung 12 angrenzenden Vakuum-Isolationspaneels 14 zu verhindern.

Das Vakuum-Isolationspaneel kann einstückig sein oder aber auch aus mehreren flächenhaften Teilelementen zusammengesetzt sein. Herkömmliche Vakuum-Isolationspaneele sind 10 bis 40mm dick und weisen eine Wärmeleitfähigkeit λ ≤ 0,010 bzw. ≥ 0,005 W/mK auf. Der Aufbau herkömmlicher Vakuum-Isolationselemente wurde im Rahmen der Würdigung des Standes der Technik bereits erläutert.

Das Vakuum-Isolationselement 14 wird zwischen der äußeren Abdeckung 12 und einer inneren Abdeckung 16 gehalten, die so geformt ist, dass sie flächig an einem Teil des Vakuum-Isolationselements 14 anliegt und das Vakuum-Isolationselement im Zusammenwirken mit der äußeren Abdeckung 12 hält. Die innere Abdeckung besteht im allgemeinen aus Metall, wobei Stahl, Edelstahl oder Aluminium vorrangig zum Einsatz kommt.

Die innere Abdeckung 16 ist so geformt, dass zwischen dem Vakuum-Isolationspaneel 14 und der inneren Abdeckung 16 ein Hohlraum zur Aufnahme eines Dämmelements 18 verbleibt.

Das Dämmelement 18 besteht vorzugsweise aus Mineralfaser oder organischem Schaum und dient dazu, vor allem die Schalldämmung zu verbessern. Ein zusätzlicher, positiver Effekt im Hinblick auf die Verbesserung der Wärmedämmung kann selbstverständlich ebenso vorhanden sein, ist aber nicht die Kernaufgabe des Dämmelements 18.

Der in Fig. 1 dargestellte Paneelaufbau kann im Bereich der schematisch dargestellten Dichtungen 20 und 22 in einer Rahmenprofilkonstruktion befestigt werden, wobei die schematisch angedeutete Dichtung 20 der Innendichtung und die schematisch angedeutete Dichtung 22 der Außendichtung entspricht. Auf der in der Zeichenebene der Fig. 1 rechten Seite des Paneelaufbaus 10 ist selbstverständlich eine vergleichbare Halterung vorhanden.

Bei dem in Fig. 2 dargestellten Beispiel liegt im wesentlichen derselbe Aufbau des Paneels vor, wobei sich an eine äußere Abdeckung 12 das Vakuum-Isolationspaneel 14 anschließt und zwischen der inneren Abdeckung 16 und dem Vakuum-Isolationspaneel 14 das Dämmelement 18 angeordnet ist. Im Ausführungsbeispiel nach Fig. 2 ist allerdings die innere Abdeckung 16 ohne die in Fig. 1 dargestellte Ausbuchtung geformt und es sind Abstandshalter 24 zwischen der dem Dämmelement zugewandten Seite des Vakuum-Isolationspaneels 14 und der inneren Abdeckung 16 angeordnet. Auf diese Weise wird ebenfalls ein starrer Raum zur Aufnahme des Dämmelements 18 begrenzt und eine klemmende Anbringung zwischen den schematisch angedeuteten Dichtungsstreifen 20 und 22 ermöglich, ohne das Dämmelement 18 zu komprimieren.

Die Gestaltung nach Fig. 3 unterscheidet sich von der Ausführungsform nach Fig. 2 nur im Hinblick auf die Gestaltung der Abstandshalter 24 und dementsprechend der Abmessung der inneren Begrenzung 16. Bei dem Beispiel nach Fig. 3 wären die nicht dargestellten Dichtungen jeweils an der äußeren Begrenzung 12 und inneren Begrenzung 16 anliegend vorgesehen.

Die Abstandshalter bestehen im allgemeinen aus Holz oder druckfestem Schaum. Es kann aber auch eine druckfeste Mineralfaser und ähnliches eingesetzt werden.

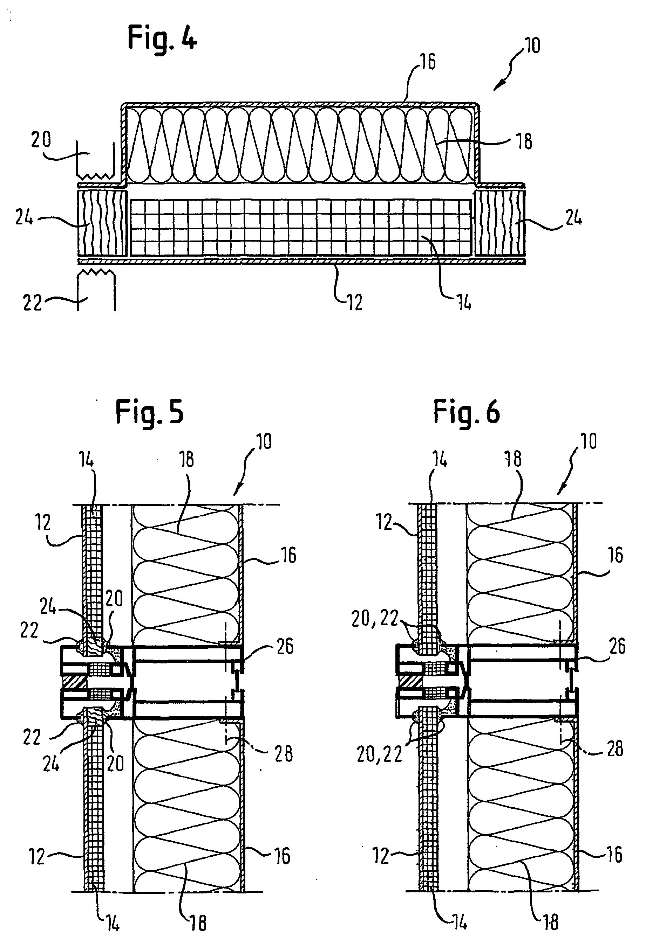

Die Gestaltung nach Fig. 4 ähnelt im wesentlichen der Gestaltung nach Fig. 1 mit einer Formgebung der inneren Abdeckung 16, die in einer starren Ausbauchung den nicht komprimierbaren Aufnahmeraum für das Dämmelement 18 vorsieht. Der Unterschied besteht allerdings darin, dass das Vakuum-Isolationspaneel 14 nicht zwischen innerer Abdeckung 16 und äußerer Abdeckung 12 klemmend gehalten wird, sondern anstelle dessen wieder Abstandshalter 24 vorgesehen sind. Der Vorteil dieser Gestaltung besteht darin, dass das mechanisch empfindliche Vakuum-Isolationspaneel 14 nicht durch Kompression zwischen der inneren und äußeren Abdeckung beschädigt werden kann. Um das Vakuum-Isolationspaneel 14 allerdings in seiner Lage zu fixieren, kann dieses vorzugsweise mit der äußeren Abdeckung 12 verklebt sein.

In den Figuren 5 und 6 sind zwei weitere Formen eines nicht erfindungsgemäßen Paneelaufbaus und die Einbindung desselben in eine Rahmenprofilkonstruktion dargestellt. In beiden Fällen ist ein schematisches Beispiel eines Rahmenprofils 26 einer Elementfassade dargestellt. Während das Vakuum-Isolationspaneel 14 gemeinsam mit der äußeren Abdeckung 12 zwischen den Dichtungen 20 und 22 gehalten wird, ist die innere Abdeckung 16 über eine geeignete Verbindung, z.B. eine Schraubenverbindung 28 am Rahmenprofil 26 befestigt. Das Dämmelement 18 ist klemmend zwischen benachbarten Rahmenprofilbereichen 26 eingebaut. Die Beispiele nach Figuren 5 und 6 unterscheiden sich dahingehend, dass bei der Gestaltung nach Fig. 6 das Vakuum-Isolationspaneel gemeinsam mit der äußeren Abdeckung direkt klemmend zwischen Innen- und Außendichtung eingebaut ist, während bei der Gestaltung nach Fig. 5 wiederum ein Abstandshalter 24 vorgesehen ist.

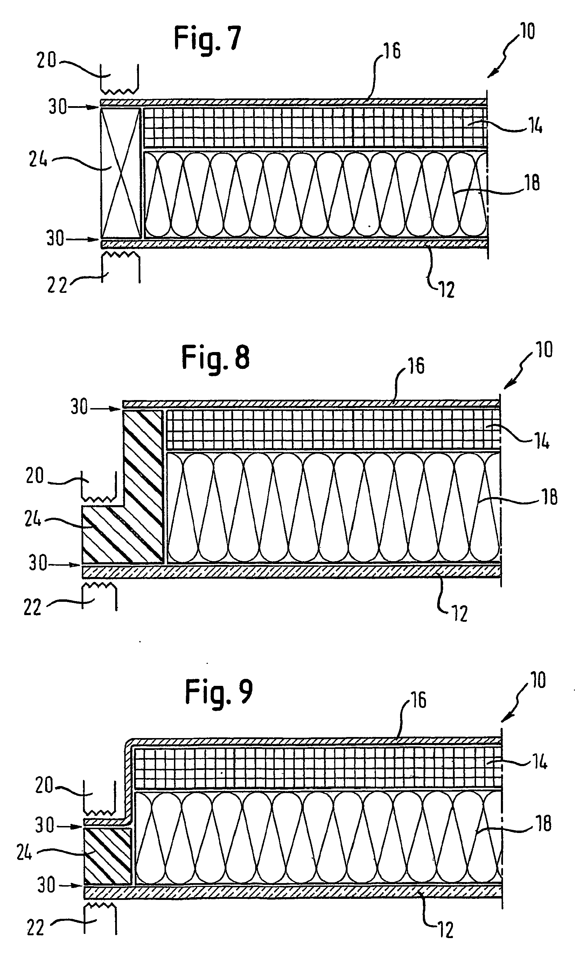

Bei den Ausführungsformen der Erfindung nach Fig. 7 bis 12 ist jeweils das Vakuum-Isolationspaneel 14 angrenzend an die innere Abdeckung 16 angeordnet. Diese Gestaltung besitzt gegenüber der in den Fig. 1 bis 6 dargestellten Anordnung den Vorteil, dass ein Tauwasserrisiko an der Oberfläche des Vakuum-Isolationspaneels ausgeschlossen werden kann. Da darüber hinaus aufgrund der Verlagerung zur Fassadeninnenseite zu kein Überhitzungsrisiko am Vakuum-Isolationspaneel besteht, lässt sich die Lebensdauer des Vakuum-Isolationspaneels sichern und die äußere Abdeckung 12 beliebig gestalten, ohne auf den beschränkten Anwendungsbereich des Vakuum-Isolationspaneels Rücksicht nehmen zu müssen.

Die Ausführungsform nach Fig. 7 verwendet eine Glasscheibe als äußere Abdeckung 12 sowie einen Abstandshalter 24, der sich vollständig zwischen äußerer Abdeckung 12 und innerer Abdeckung 16 erstreckt. Zur Fixierung der einzelnen Elemente zu einem einstückigen Paneelaufbau sind in den mit 32 angeordneten Bereichen Klebeverbindungen zwischen Abstandshalter 24 und innerer Abdeckung 16 bzw. äußerer Abdeckung 12 vorhanden. Darüber hinaus kann das Vakuum-Isolationspaneel 14 mit der inneren Abdeckung 16 verklebt sein, um dieses in Bezug auf die Lage zu fixieren. Alternativ kann das Vakuum-Isolationspaneel 14 auch lose eingelegt sein. Schließlich ist es denkbar, durch den Dämmkörper 18 eine leichte Klemmung zu realisieren, so dass das Vakuum-Isolationspaneel 14 formschlüssig gegen Verrutschen gesichert ist.

Die Innendichtung 20 und Außendichtung 22 greifen bei dem dargestellten Ausführungsbeispiel an der inneren Abdeckung 16 und äußeren Abdeckung 12 an.

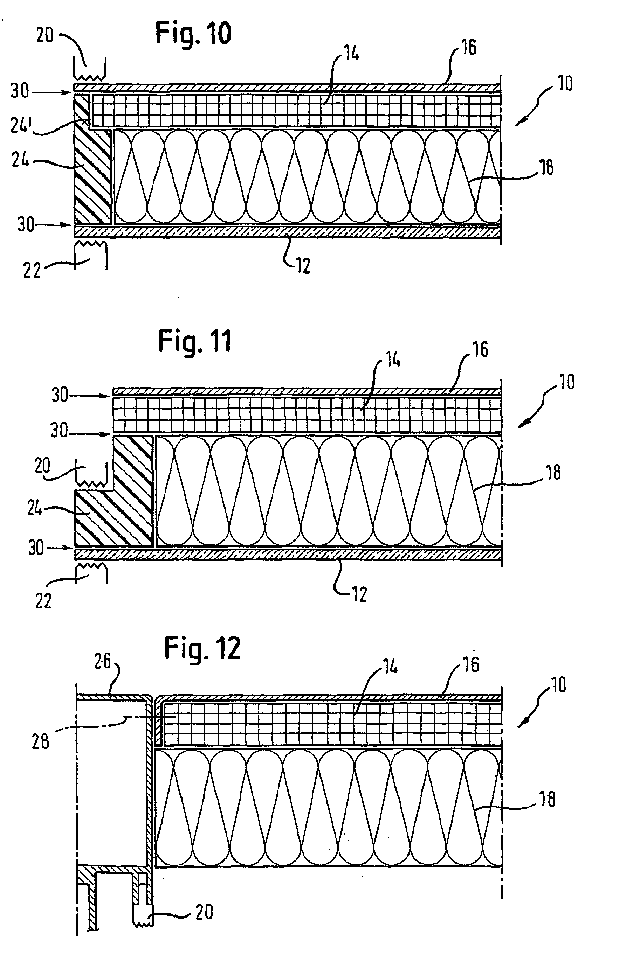

Das Ausführungsbeispiel nach Fig. 8 unterscheidet sich lediglich in Bezug auf die Formgebung des Abstandshalters 24, der L-förmig gestaltet ist (siehe auch Fig. 11), sich aber vollständig im Bereich zwischen innerer und äußerer Abdeckung erstreckt und zudem mit diesen durch Klebeverbindungen 30 fest verbunden ist. Aufgrund der Formgebung des Abstandshalters besitzt die innere Abdeckung 16 eine geringere Erstreckung als die äußere Abdeckung 12 und die Innendichtung 20 kann direkt am Abstandshalter 24 angreifen.

Fig. 9 zeigt eine alternative Ausführungsform, bei der die innere Abdeckung 16 wie im Ausführungsbeispiel nach Fig. 1 bzw. 4 wannenförmig gestaltet ist. Die Ausführungsform nach Fig. 9 ist ähnlich der in Fig. 4 dargestellten Ausführungsform, wobei lediglich die Position des Dämmelements 18 und des Vakuum-Isolationspaneels 14 vertauscht sind und das Vakuum-Isolationspaneel 14 gegebenenfalls mit der inneren Abdeckung 16 verklebt ist.

Eine weitere Ausführungsform eines erfindungsgemäßen Paneelaufbaus ist in Fig. 10 dargestellt. In diesem Fall kann eine Verklebung des Vakuum-Isolationspaneels 14 mit der inneren Abdeckung 16 entfallen, weil die Abstandshalter 24 so geformt sind, dass sie einerseits den Abstand zwischen innerer Abdeckung 16 und äußerer Abdeckung 12 herstellen und zudem mit diesen an den mit Referenzziffer 30 bezeichneten Kontaktstellen verklebt sind, und andererseits auch eine formschlüssige Aufnahme 24' aufweisen, um das Vakuum-Isolationspaneel 14 in Bezug auf die Lage zu fixieren.

Die in Fig. 11 dargestellte Ausführungsform ist der in Fig. 2 dargestellten Anordnung ähnlich, wobei lediglich die Position des Dämmelements 18 sowie Vakuum-Isolationspaneels 14 und die sich hieraus ergebenen Abmessungen vertauscht sind. Die Abstandshalter 24 sind einerseits mit der äußeren Abdeckung 12 und andererseits dem Vakuum-Isolationspaneel 14 verklebt und das Vakuum-Isolationspaneel 14 wiederum mit der innere Abdeckung 16 verklebt.

Fig. 12 zeigt eine Anbringungsvariante eines erfindungsgemäßen Paneelaufbaus, der aus mehreren Bauteilen besteht und somit der Anordnung nach Fig. 5 und 6 ähnlich ist. Der wesentliche Unterschied besteht allerdings darin, dass das Vakuum-Isolationspaneel 14 zur inneren Abdeckung 16 hin angeordnet ist. Die innere Abdeckung 16 ist über eine geeignete Verbindung, z.B. eine Schraubenverbindung 28, mit dem Rahmenprofil 26 verbunden und hält das Vakuum-Isolationspaneel 14. Die sich an das Vakuum-Isolationspaneel anschließende Dämmschicht in Form des Dämmelements 18 wird zwischen benachbarten Rahmenprofilen 26 klemmend eingebaut und die in Fig. 12 nicht dargestellte äußere Abdeckung in Form einer Verglasung zwischen der Innendichtung 20 und einer nicht dargestellten Außendichtung und Pressleiste fixiert.

Allen Ausführungsformen ist gemeinsam, dass ein Paneelaufbau beschrieben wird, bei dem ein Vakuum-Isolationspaneel mit guten Wärmeisolationseigenschaften mit einem Dämmelement kombiniert wird, das der zusätzlichen Schallisolation dient. Das Vakuum-Isolationspaneel ist zur Innenseite hin angeordnet, was den Vorteil mit sich bringt, dass ein Tauwasserrisiko an der Oberfläche des Vakuum-Isolationspaneels ausgeschlossen werden kann. Voraussetzung hierfür ist, dass die Wärmedurchlasswiderstände in geeigneter Weise aufeinander abgestimmt sind.

## Patentansprüche

1. Paneelaufbau (10) für Wandkonstruktionen, der in Form eines Bauteils zwischen Rahmenprofilelementen anbringbar ist, umfassend:
- mindestens ein Vakuum-Isolationspaneel (14); und
- ein Dämmelement (18) ; wobei
- das Vakuum-Isolationspaneel (14) und das Dämmelement (18) zwischen einer äußeren Abdeckung (12) und einer inneren Abdeckung (14) angeordnet sind;
**dadurch gekennzeichnet, dass**
- der Paneelaufbau weiterhin druckfeste Abstandshalter (24) umfasst, die zwischen dem mindestens einen Vakuum-Isolationspaneel (14) und der an dem Dämmelement angrenzenden äußeren Abdeckung (12) und/oder zwischen innerer Abdeckung (16) und äußerer Abdeckung (12) angeordnet und vorzugsweise mit diesen verklebt sind; und
- sich das Vakuum-Isolationspaneel (14) mit seiner nach der inneren Abdeckung gerichteten Fläche näher zur inneren Abdeckung (16) befindet als das Dämmelement (18) mit seiner nach dieser inneren Abdeckung gerichteten Fläche.

2. Paneelaufbau nach Anspruch 1,
**dadurch gekennzeichnet, dass**
das mindestens eine Vakuum-Isolationspaneel (14) mit der inneren Abdeckung (16) verklebt ist.

3. Paneelaufbau nach einem der vorhergehenden Ansprüche,
**dadurch gekennzeichnet, dass**
die äußere Abdeckung (12) aus Glas, vorzugsweise aus ESG oder TVG, besteht.

4. Paneelaufbau nach Anspruch 3,
**dadurch gekennzeichnet, dass**
das Glas der äußeren Abdeckung (12) emailliert oder siebbedruckt oder beschichtet oder eingefärbt ist.

5. Paneelaufbau nach einem der Ansprüche 1 bis 3,
**dadurch gekennzeichnet, dass**
die äußere Abdeckung (12) aus Metall, vorzugsweise Stahl, Edelstahl oder Aluminium, oder aus Kunststoff besteht.

6. Paneelaufbau nach einem der vorhergehenden Ansprüche,
**dadurch gekennzeichnet, dass**
das Dämmelement (18) aus Mineralfaser besteht.

7. Paneelaufbau nach Anspruch 1,
**dadurch gekennzeichnet, dass**
das Vakuum-Isolationspaneel (14) in zumindest einen Abstandshalter (24) eingelegt ist.

8. Elementfassade, umfassend Rahmenprofilelemente (26), zwischen denen Paneele (10) nach einem der vorhergehenden Ansprüche gehalten werden,
**dadurch gekennzeichnet, dass**
die äußere Abdeckung (12) zwischen einer Innendichtung (20) und einer Außendichtung (24) klemmend gehalten ist und die innere Abdeckung (16) am Rahmenprofilelement (26) befestigt (28) ist.

## Claims

1. Panel structure (10) for wall constructions, which in the form of a structural member can be mounted between frame profile elements, including:
- at least one vacuum insulation panel (14); and
- an insulating element (18); wherein
- the vacuum insulation panel (14) and the insulating element (18) are arranged between an outer cover (12) and an inner cover (14);
**characterised in that**
- the panel structure further includes pressure-resistant spacers (24) which are arranged between the at least one vacuum insulation panel (14) and the outer cover (16) adjoining the insulating element and/or between inner cover (16) and outer cover (12) and preferably adhered to the covers; and
- the vacuum insulation panel (14) with its surface directed towards the inner cover is located closer to the inner cover (16) than the insulating element (18) with its surface directed towards this inner cover.

2. Panel structure according to claim 1, **characterised in that** the at least one vacuum insulation panel (14) is adhered to the inner cover (16).

3. Panel structure according to any of the preceding claims, **characterised in that** the outer cover (12) is made of glass, preferably toughened glass or partially prestressed glass.

4. Panel structure according to claim 3, **characterised in that** the glass of the outer cover (12) is enamelled or screen-printed or coated or coloured.

5. Panel structure according to any of claims 1 to 3, **characterised in that** the outer cover (12) is made of metal, preferably steel, special steel or aluminium, or of plastic.

6. Panel structure according to any of the preceding claims, **characterised in that** the insulating element (18) is made of mineral fibre.

7. Panel structure according to claim 1, **characterised in that** the vacuum insulation panel (14) is laid in at least one spacer (24).

8. Unit fagade, including frame profile elements (26) between which panels (10) according to any of the preceding claims are held, **characterised in that** the outer cover (12) is held clampingly between an inner seal (20) and an outer seal (24) and the inner cover (16) is attached (28) to the frame profile element (26).

## Revendications

1. Structure de panneau (10) pour des constructions murales qui est montable sous forme d'élément entre des éléments de profilé de cadre, comprenant :
- au moins un panneau d'isolation sous vide (14) ; et
- un élément isolant (18) ;
- le panneau d'isolation sous vide (14) et l'élément isolant (18) étant disposés entre un revêtement extérieur (12) et un revêtement intérieur (14);
**caractérisée en ce que**
- la structure de panneau comprend de plus des entretoises (24) résistantes à la pression qui sont disposées entre l'au moins un panneau d'isolation sous-vide (14) et le revêtement extérieur (12) adjacent à l'élément d'isolation et/ou entre le revêtement intérieur (16) et le revêtement extérieur (12) et sont de préférence collées avec ceux-ci ; et
- le panneau d'isolation sous-vide (14) se trouve, avec sa face orientée vers le revêtement intérieur, plus près du revêtement intérieur (16) que l'élément isolant (18) avec sa face orientée vers ce revêtement intérieur.

2. Structure de panneau selon la revendication 1,
**caractérisée en ce que**
l'au moins un panneau d'isolation sous-vide (14) est collé avec le revêtement intérieur (16).

3. Structure de panneau selon l'une quelconque des revendications précédentes,
**caractérisée en ce que**
le revêtement extérieur (12) est en verre, de préférence en verre mono- couche de sécurité ou en verre semi-trempé.

4. Structure de panneau selon la revendication 3,
**caractérisée en ce que**
le verre du revêtement extérieur (12) est émaillé ou sérigraphié ou revêtu ou teinté.

5. Structure de panneau selon une des revendications 1 à 3,
**caractérisée en ce que**
le revêtement extérieur (12) est en métal, de préférence en acier, en acier spécial ou aluminium, ou en plastique.

6. Structure de panneau selon l'une quelconque des revendications précédentes,
**caractérisée en ce que**
l'élément d'isolation (18) est en fibre minérale.

7. Structure de panneau selon la revendication 1, ..
**caractérisée en ce que**
le panneau d'isolation sous-vide (14) est placé dans au moins une entretoise (24).

8. Façade d'élément, comprenant des éléments de profilé de cadre (26) entre lesquels des panneaux (10) selon une des revendications précédentes sont maintenus,
**caractérisée en ce que**
le revêtement extérieur (12) est maintenu de façon calée entre un joint intérieur (20) et un joint extérieur (24) et le revêtement intérieur (16) est fixé (28) à l'élément de profilé de cadre (26).
